# EUROPEAN PATENT SPECIFICATION

(11) **EP 0 545 879 B1**
(45) Date of publication and mention of the grant of the patent: **21.05.1997**
(21) Application number: 92850279.8
(22) Date of filing: 27.11.1992
(51) Int. Cl.: B23B 39/16

(54) **Device for drilling holes into the mantle of a cylinder in a paper machine**
Bohrvorrichtung für Löcher im Zylinder einer Papiermaschine
Dispositif de forage de trous dans un cylindre d'une machine à papier

(30) Priority: 29.11.1991 FI 915664
(43) Date of publication of application: 09.06.1993
(73) Proprietor: VALMET CORPORATION, 00620 Helsinki (FI)
(72) Inventor: Rajala, Kari, 40600 Jyväskylä (FI); Parviainen, Seppo, 40100 Jyväskylä (FI)
(74) Representative: Rostovanyi, Peter

(56) References cited:
- EP-A- 0 448 947
- DE-A- 2 205 285
- US-A- 4 674 925

## Description

The invention concerns a device for perforation of the mantle of a cylinder in a paper machine, in particular of the mantle of a drying cylinder.

In operations of modification of the cylinders in a drying group in a paper machine, the drying cylinder has been removed from its place and carried aside for machining. At present, ordinary non-perforated cylinders in a drying group are converted to so-called UNO-Vac cylinders by perforating the cylinder mantle. In the applicant's FI Pat. Appl. No. 901367 (EP-A-448 947) a method and a device are described by whose means the perforating can be carried out on the site at the paper mill without detaching the cylinder.

In the application FI 901367, an arrangement is described in which the drilling machine moves on support of separate guides in the axial direction of the roll. During the machining process, the drilling unit is fitted to be supported both on the mantle face of the cylinder that is being machined and on the mantle face of the adjacent cylinder.

The equipment comprises such a spindle box of a multi-spindle drilling machine as contains a unit of rotation for the drill bits and related power transmission means for simultaneous transfer of the rotation to all of the drill bits placed side by side. The equipment further comprises a cylinder, by whose means the jig of the drill bits, i.e. the drill guide, is controlled into contact with the face to be machined, whereby, as the equipment is supported both on the cylinder that is being machined and on the adjacent other cylinder constituting a support base for the guides, for the time of the machining a unified robust structure is formed to permit undisturbed drilling.

The equipment comprises a spindle box displaceable in relation to the main frame and therein a separate motor for displacing of the spindle box with its drills. Further, the equipment comprises a motor for the rotation of the drill bits.

In the solution of the applicant's earlier FI Pat. Appl. 901367, the drill bits are placed in a fixed position in relation to one another. In such a case, the spacing of the grooves in the roll must also be fixed, because it is preferable that the perforations are placed expressly in the bottoms of the grooves. However, the spacing of the grooves may vary from cylinder to cylinder. In the present application, an improvement is suggested for the drilling device known from the FI Pat. Appl. No. 901367. According to the invention, a drilling equipment is provided in which the spacing between adjacent drill bits can be adjusted as desired.

US-A-4 674 925 discloses a device according to the preamble of claim 1 and a slide frame of a guide pulley displaceable in a circular groove.

The device in accordance with the invention is characterized by the features in the characterizing clause of claim 1

The invention will be described in the following with reference to some preferred embodiments of the invention illustrated in the figures in the accompanying drawings, the invention being, however, not supposed to be confined to said embodiments alone.

Figure 1 is an axonometric view of an equipment in accordance with the invention.

Figure 2 is a schematic illustration of the main components and the main functions of the device in accordance with the invention.

Figure 3A is a side view of the device.

Figure 3B shows the device as seen in the direction of the arrow K₁ in Fig. 3A.

Figure 3C is a sectional view taken along the line I-I in Fig. 3B.

Figure 3D is a partial illustration seen in the direction of the arrow K₂ in Fig. 3B.

Figure 4A is an axonometric illustration of the arrangement of equipment employed for the adjustment of the spacing of adjacent drill bits. Figures 4B and 4C illustrate the process of adjustment. Figure 4D is an illustration seen from the end of a drill shaft. Figure 4E is a sectional view taken along the line II-II in Fig. 4D.

Figure 5 is a sectional view of the arrangement of equipment employed for displacing the spindle box and the drill guide.

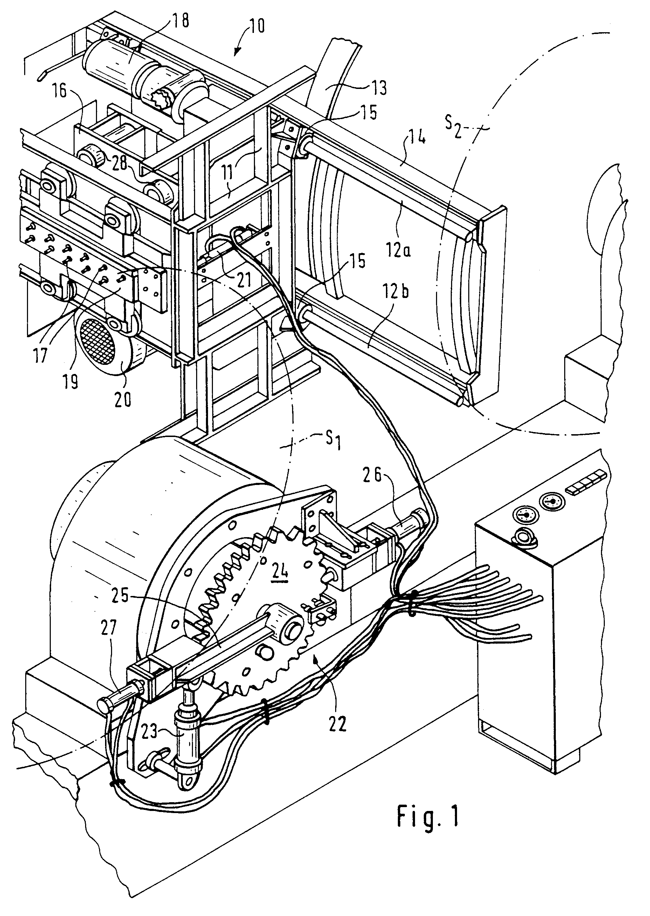

Fig. 1 is an axonometric view of a preferred embodiment of the device in accordance with the invention in its machining location between two adjacent cylinders S₁ and S₂ of a paper machine. The equipment 10 comprises a base frame 11, which is supported on guides 12 supported and fixed on the cylinder S₂ on the cylinder mantle. The guides 12a and 12b are connected with the frame part 14, which is further supported on the face of the cylinder S₂ by means of fastening belts 13 (one belt is shown in the figure). The belts 13 are passed around the cylinder. The guides 12a and 12b pass in the axial direction of the cylinder over the width of the mantle of the cylinder.

The base frame 11 of the drilling equipment 10 comprises slide bushings 15, on whose support the base frame 11 is displaced in the axial direction of the cylinder manually after each drilling cycle.

The drilling equipment 10 in accordance with the invention comprises a spindle box 16, to which the motor 18 of rotation of the drill bits 17 is attached. In the embodiment shown in Fig. 1, the motor 18 of rotation is fitted to rotate twelve drill bits 17 placed side by side at the same time. The spindle box further comprises a motor 20 attached to the box, by means of which motor the spindle box 16 and the drill bits 17 placed in it are displaced so as to produce the feed movement of the drill bits 17 or to move the drill bits apart from the roll mantle to be drilled after the drilling.

Before the drilling is started, the drill guide 19 is brought into contact with the mantle face to be machined by displacing the drill guide 19 by means of its actuator 21, preferably a cylinder device, into contact with the cylinder face. Thus, for the time of the drilling, the drill equipment 10 is supported both on the cylinder S₁ to be machined and on the adjacent cylinder S₂. Thus, when the drill guide 19 is tensioned against the face to be machined by means of the actuator 21, the overall construction becomes rigid. Precise drilling can be accomplished as the vibrations during the machining are minimized.

In Fig. 1, the reference numeral 22 denotes the equipment of rotation of the cylinder to be machined. The equipment 22 of rotation comprises a cogwheel 24 and a lever 25 of rotation connected to the axle of the cylinder S₁. On completion of its working stroke, the lifting cylinder 23 shifts the lever 25 upwards and rotates the cylinder S₁ to be machined to the next working step after the preceding row has been drilled. The movement of rotation corresponds to one tooth gap, and the cylinder is locked by means of a locking cylinder 26,27 in a fixed position for the time of the machining.

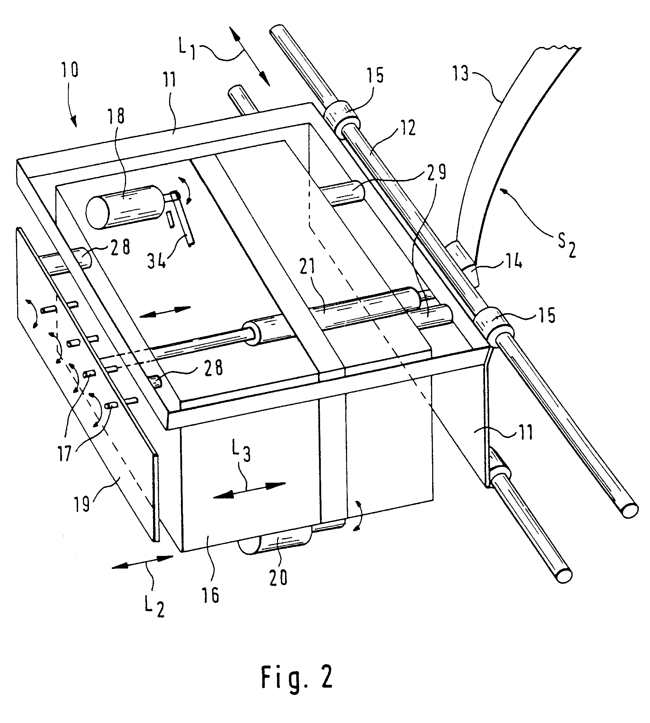

Fig. 2 is a schematic illustration of the main components of the drilling equipment 10 in accordance with the invention. The drill equipment 10 comprises a base frame 11. The base frame 11 is supported on the guides 12 by means of slide bushings 15 connected to the base frame 11. The guides 12 are connected to the frame part 14, which frame part 14 is attached by means of a fastening belt 13 to the cylinder adjacent to the cylinder to be machined. The spindle box 16 is displaced in relation to the base frame 11 by means of a motor 20 of displacement of the spindle box. The spindle box 16 comprises a number of drill bits 17 placed side by side, said drill bits being rotated by means of a rotation motor 18. The motors 18 and 20 of rotation are placed in fixed positions in the spindle box 16.

The drill guide 19 is displaced in relation to the spindle box 16 as guided by separate guide shafts 28, and the displacing of the drill guide 19 is produced by means of an actuator 21, preferably a cylinder device passed through the spindle box 16. By operating the cylinder device 21, the drill guide 19 is displaced into contact with the roll mantle to be machined while the guide shafts 28 glide in the guide bushings 29b in the ends of the guide shafts 29 of the spindle box 16. The cylinder frame of the cylinder device 21 is attached to the base frame 11 by its end. The drill guide 19 is attached to the end of the piston rod of the cylinder device 21.

The drilling process is as follows. The drill equipment 10 is fixed to the cylinder S₂ adjacent to the cylinder S₁ to be machined by means of fastening belts 13 (in the figure, one belt 13 is shown). The equipment 10 is displaced (arrow L₁) into the drilling position along the guides 12. By means of the cylinder device 21, the jig, i.e. the drill guide 19, is displaced into contact with the face of the cylinder to be machined (arrow L₂). The spindle box 16 with the drill bits 17 is displaced by means of the motor 20 towards the cylinder S₁ to be machined (arrow L₃). The spindle box 16 is guided by the shafts 29. The rotation of the drill bits 17 is switched on, i.e. the motor 18 is switched on.

Upon completion of drilling, the sequence of operations is reversed, and the drill equipment 10 is shifted to a new drilling position along the guides 12, being guided by the slide bushings 15.

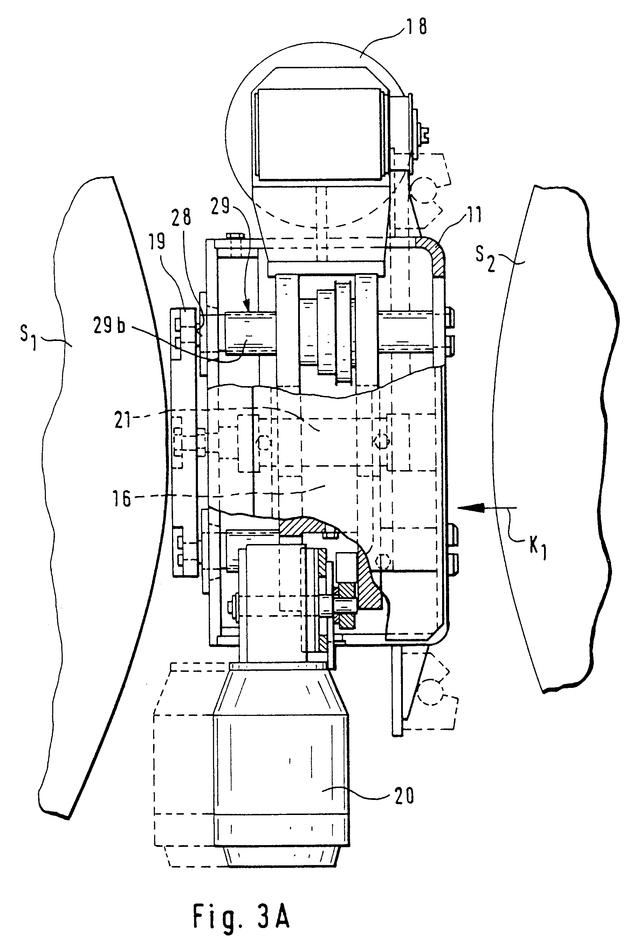

Fig. 3A is a side view of an equipment in accordance with the invention. The drill guide or drill jig 19 is placed by means of the cylinder device 21 into contact with the face of the cylinder S₁ to be machined. The jig 19 is guided as the guide shafts 28 attached to the jig are guided in the bushing-shaped ends 29b of the shafts 29. The shaft 29 is supported on the base frame 11 from both of its ends. The drill bits 17 are rotated by means of a motor 18. The feed movement of the drill bits 17 is produced by means of a motor 20, which shifts the spindle box 16 and the drill bits 17 placed in same towards the cylinder S₁ to be machined.

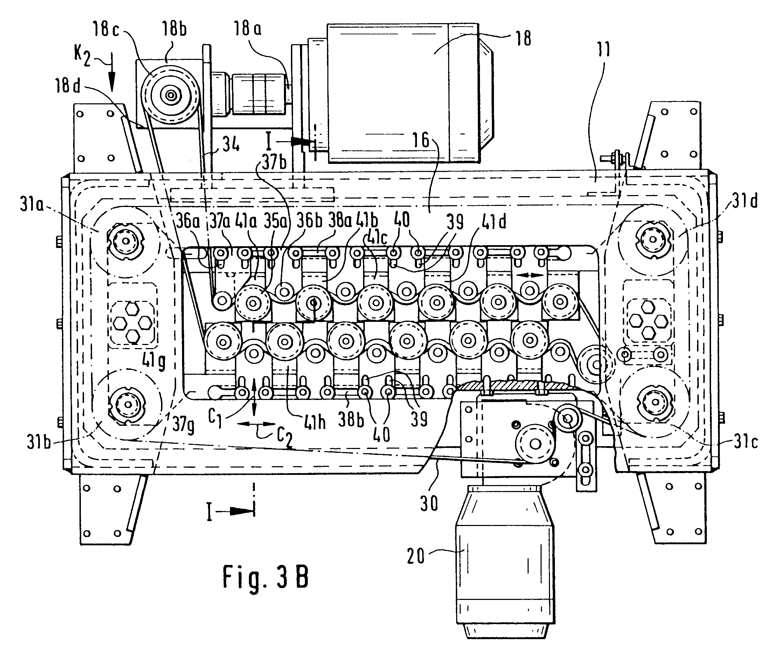

Fig. 3B shows the equipment as viewed in the direction of the arrow K₁ in Fig. 3A. As is shown in Fig. 3B, the spindle box 16 comprises the motors 18 and 20 attached to the box. The motor 18 is fitted so that its output shaft 18a is coupled with the drive pulley 18c through the transmission 18b, said drive pulley 18c being fitted to drive and to rotate the drive belt 18d. The drive belt 18d is preferably a cogged belt, and it is fitted to run meandering over the guide pulleys 36a,36b... and over the drill-bit 17a, 17b... drive pulleys, preferably cogged-belt pulleys 35a,35b..., placed between said guide pulleys.

The drill bits 17a, 17b... and their drive pulleys 35a,35b... are placed in their slide frames 41a,41b... Each slide frame 41a,41b... is adjustable in respect of its horizontal position (arrow C₂), and thereby the spacing of the drill bits in relation to one another can be adjusted. The tensioning and guide pulleys 36a,36b... of the belt 18d are placed in slide frames 37a,37b... of their own. The position of each slide frame 37a,37b... and of the guide pulley 36a,36b... placed on it can be adjusted both vertically (as indicated by the arrows C₁) and horizontally (as indicated by the arrows C₂) by shifting the slide frame 37a,37b... The spindle box 16 comprises guide grooves 38a,38b, whereby each slide frame 37a,37b... can be shifted to the desired location on the guide groove 38a,38b and be locked at the desired location on the guide groove by means of adjusting screws 40.

Each slide frame 37a,37b... comprises vertical guide grooves 39. In such a case, the position of the slide frame can also be adjusted in the vertical direction (direction C₁). Thus, by adjusting the position of the slide frame 37a,37b..., it is possible adjust the desired horizontal and vertical position of the guide pulley 36a,36b... placed in the slide frame 37a,37b...

By means of the motor 20, the cogged belt 30 is rotated, which belt runs over the cogged-belt pulleys 31a,31b... and moves the spindle box 16 and the drill bits 17a, 17b, 17c... placed in same in order to produce a feed movement of the drill bits 17a, 17b, 17c... When the sense of rotation of the motor 20 is reversed, the direction of movement of the spindle box 16 is also reversed. Thus, by means of the motor 20, the feed movement is produced for the drill bits 17a, 17b..., and when the sense of rotation of the motor 20 is reversed, the drill bits 17a, 17b... are pulled apart from the cylinder S₁ to be machined.

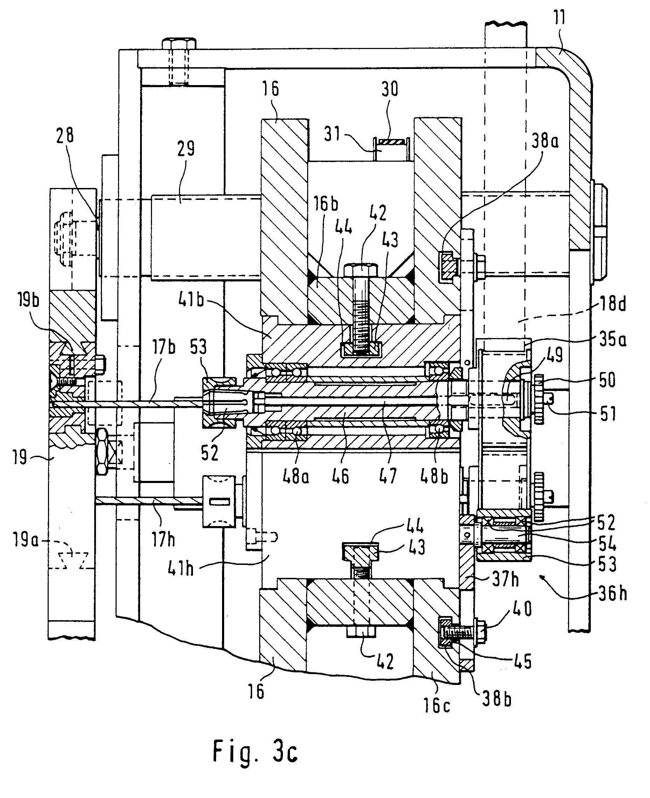

Fig. 3C is a sectional view taken along the line I-I in Fig. 3B. Since, according to the invention, the mutual spacing of the drill bits 17a,17b,17c... is adjustable, the drill guide 19 must also be provided with means that permit its adjustment. As is shown in Fig. 3B, the drill guide 19 comprises displaceable slide frames 19', which can be guided in the dovetail guides 19a, 19b of the drill guide 19 in the lateral direction into a position corresponding to that into which the drill bit 17 related to the slide frame 19' is shifted.

As is shown in Fig. 3C, the equipment comprises slide frames 41a,41b..., which can be displaced in the lateral direction and fixed to the desired location. In connection with the spindle box 16, the equipment comprises an adjusting screw 42 passed through the plate construction 16b of the spindle box, the end of said adjusting screw 42 being coupled by means of a screw threading with a tightening nut 43, which is fitted to pass in a backed-off groove 44, said groove being machined into each slide frame 41a,41b...41h... In the slide frame 41a,41b...41h..., a drill shaft 46 is mounted as revolving by means of the bearing means 48a,48b, to which shaft 46 the drill bit 17b can be attached in the desired position by means of a cone 52 and a tightening nut 53. The adjustment of the position of the drill bit 17 takes place so that the drill bit 17 is displaced by means of an adjusting rod 47 passing through the drill-bit frame 46. The position of the adjusting rod 47 can be adjusted by means of the screw 51, and the position of the adjusting rod 47 can be locked by means of the nut 50. The drill shaft 46 receives its movement of rotation from the drive pulley 35 connected to its end, which pulley is rotated by the belt 18d.

In Fig. 3C, a second slide frame 41h is also shown, which comprises a drill bit 17h. In a corresponding way, the horizontal position of this slide frame 41h can be adjusted in relation to the spindle box 16 by means of screw means 42.

In the way shown in Fig. 3C, the slide frame 37h of the guide pulley 36h is connected with the spindle box 16, with its frame plate 16c. The adjustment of the position of the slide frame in the groove 38b takes place by means of the screw 40, which is coupled with the nut 45 placed in the groove 38b. When the screw 40 is rotated, the nut 45 can be tightened in the groove 38b against the face of the groove. Thus, the slide frame 37h can be locked in the desired position in the groove 38b.

The guide pulley 36h comprises a wheel part 53, which is mounted as revolving on the shaft 54 by means of bearing means 52. The shaft 54 is fixed in a stationary position on the slide frame 37h.

Fig. 3D is an illustration in part of Fig. 3B seen in the direction of the arrow K₂.

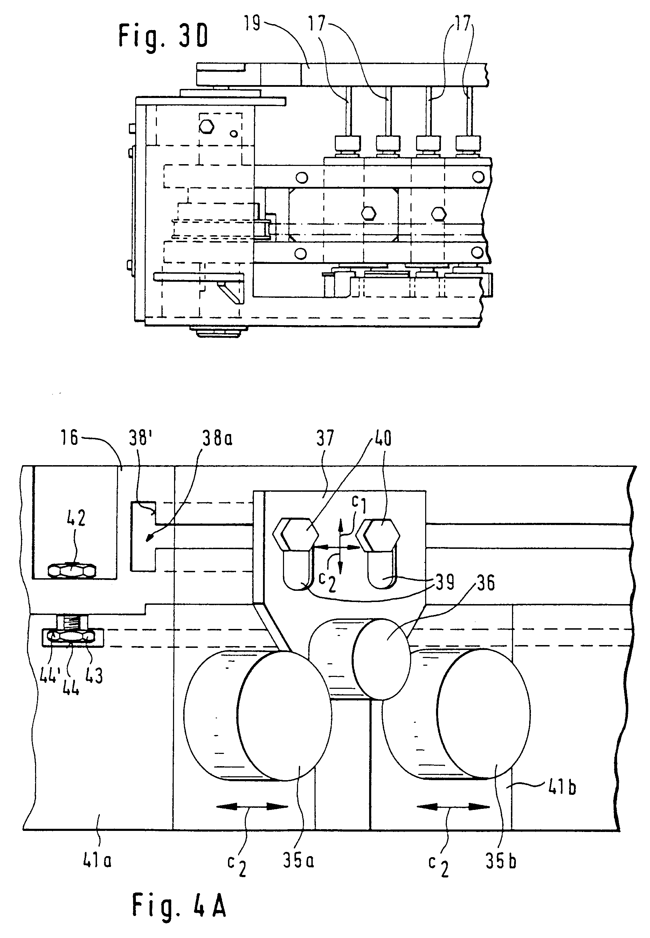

Fig. 4A illustrates the process of adjustment of the positions of the drill bits in accordance with the invention. In the way shown in Fig. 4A, the drive pulleys 35a,35b of the drill bits are journalled and fixed on their slide frames 41a,41b. The slide frames 41a,41b are fitted to be displaceable and adjustable in respect of their positions in the horizontal direction C₂ in relation to the spindle box 16. The slide frames 41a,41b comprise a guide groove 44. When the screw 42 is rotated, the nut 43 or equivalent can be connected to the face 44' of the backed-off groove 44. In a corresponding way, the slide frame 37 of the belt 18d guide pulley 36 can be displaced in the horizontal direction C₂ and so also in the vertical direction C₁. The slide frame 37 comprises vertical grooves 39, through which the adjusting screws 40 are passed. The slide frame 37 can be displaced in the backed-off groove 38 in the spindle box 16 to the desired position and be locked in said position by means of the same adjusting screws 40 by rotating the screws and by bringing the nut 45 or a corresponding locking part into contact with the top face 38' of the backed-off groove 38a.

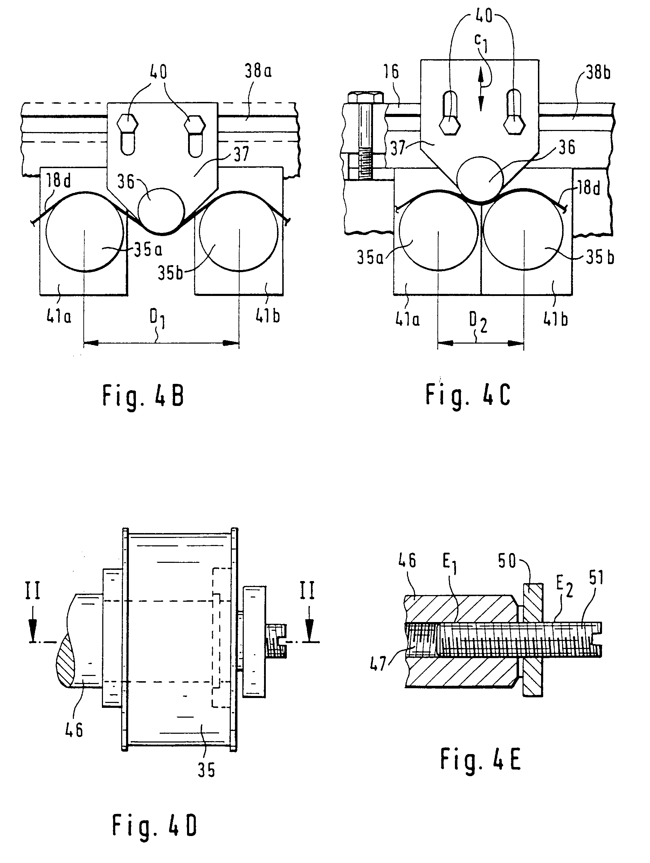

Figs. 4B and 4C illustrate the adjustment of the positions of the drill bits 17a, 17b in relation to one another. The distance between the drill bits is D₁, as is shown in Fig. 4B, and, after adjustment, D₂, as is shown in Fig. 4C. In the adjusting process, the slide frames 41a,41b have been shifted towards each other, and the slide frame 37 of the guide pulley 36 has been raised in the direction C₁.

Fig. 4D illustrates the rotation of the drill shaft 46 of the drill bit. The drive pulley 35 is coupled with the drill shaft 46.

Fig. 4E is a sectional view taken along the line II-II in Fig. 4D with the drive pulley 35 removed. Inside the shaft 46 of rotation, there is an adjusting rod 47, which can be displaced in the screw threading E₁ provided in the centre hole 46' in the drill shaft 46. The locking of the adjusting rod at the desired location takes place by rotating the locking wheel 50 on the outside threading E₂ at the end of the adjusting rod 47. The adjusting rod 47 collides against the end of the drill bit 17, and the desired stroke length of the drill bit is obtained by altering the position of the adjusting rod.

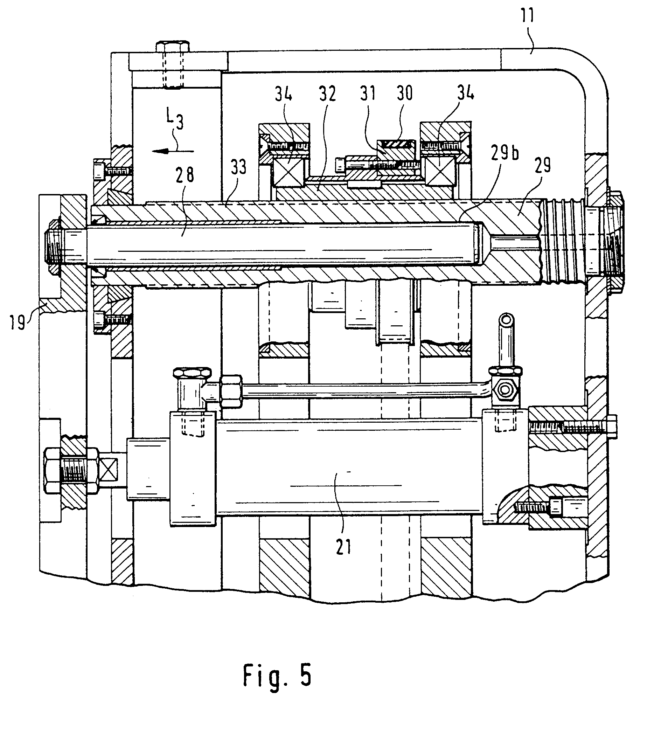

Fig. 5 is a more detailed illustration of the displacing of the spindle box and of the arrangement of displacement of the drill guide. Each cogged-belt pulley 31 comprises an inside ball nut 32. Thus, by means of the cogged belt 30, the cogged-belt pulleys 31 and the related ball nuts 32 are rotated. A ball screw 33, which has been made into the guide shaft 29 and which is jointly operative with the ball nut, has been passed through the ball nut 32. The ball screw 33 is permanently fixed to the base frame 11 from both of its ends. The ball nut 32 is mounted on the spindle box 16 by means of bearings 34. Thus, when the displacing motor 20 of the spindle box 16 is rotated, the cogged belt 30 and, further, the cogged-belt pulleys 31 are rotated, and the spindle box 16 and the related means, such as the drill bits 17, are displaced in the way indicated by the arrow L₃ towards the cylinder to be machined.

Before the drilling is started, the drill guide 19 has been transferred by means of the actuator 21 into contact with the cylinder face to be machined. The drill guide 19 is transferred on support of the guide shafts 28, being guided by the guide bushing 29b of the guide shaft 29 of the spindle box 16, into a precise position in relation to the cylinder to be machined.

Upon completion of the drilling, the sense of rotation of the displacing motor 20 of the spindle box is reversed, and the spindle box 16 with the related drill bits 17 is shifted out of connection with the cylinder to be machined.

## Claims

1. Device for drilling of holes into the mantle of a cylinder in a paper machine, said device comprising a base frame (11) and a spindle box (16) displaceable relatively to said base frame (11) towards the cylinder face to be machined,
wherein the spindle box (16) supports drill assemblies (17,46,41,...) and comprises a first drive motor (20), which is fitted to move the spindle box so as to produce a feed movement for the drill assemblies (17,46,41,...),
wherein each of said drill assemblies comprises a slide frame (41a,41b,...) to which a drill shaft (46) is connected, said drill shaft being connected to and rotated by a drive pulley (34) and being journalled by means of bearing means to revolve in relation to the slide frame (41a,41b,...), a drill bit (17a,17b,17c,...) being connected to each drill shaft (46), and
wherein the spindle box further comprises a second drive motor (18), which is fitted to rotate simultaneously the drill bits (17a,17b,17c,...) by means of a drive belt (18d),
wherein coupling means (42,43,44) are further provided between the spindle box (16) and each displaceable slide frame (30), by means of which each slide frame (41a,41b,...) can be locked in the desired horizontal position,
**characterized in that** between every adjacent slide frames (41a,41b,...) a second slide frame (37a,37b,...) is provided, and in that each said second slide frame (37a,37b,...) supports a guide pulley (36a,36b,...) for the drive belt (18d) and can be adjusted both horizontally and vertically in groove means (38,39) respectively provided in the spindle box (16) and in the second slide frames (37a,37b).

2. Device as claimed in claim 1, **characterized** in that the coupling means (42,43,44) comprise a groove (44) provided in the slide frame (41a,41b...), a nut (43) or equivalent present in the groove (44), a screw (42) being coupled with the threading in said nut (43), whereby, when the screw (42) is rotated, the nut (43) can be tightened against the wall (44') of the backed-off groove (44), whereby the slide frame (41a,41b...) can be locked in the desired horizontal position.

3. Device as claimed in claim 1 or 2, **characterized** in that, the spindle box (16) comprises a horizontal groove (38a,38b) comprised in said groove means, in which the second slide frame (37a,37b) can be locked parallel to said groove, and that the second slide frame (37a, 37b...) comprises a vertical groove (39) comprised in said groove means, whereby a locking member, preferably a screw (40), can be coupled through the vertical groove (39) with a nut (45) or equivalent present in the horizontal groove (38a,38b) in the spindle box (16), whereby, by rotating the screw (40), the second slide frame (37a,37b...) can be locked in the desired horizontal and vertical position in relation to the spindle box (16).

4. Device as claimed in any of the preceding claims, **characterized** in that the drive belt (18d) is a cogged belt, and the drive pulleys (35a,35b...) of the drill bits (17a, 17b, 17c...) are cogged-belt pulleys.

5. Device as claimed in any of the preceding claims, **characterized** in that the drill shaft (46) comprises a displaceable rod (47), which has been passed centrally through the shaft, and that the desired stroke length can be determined for the drill bit (17a,17b...) by adjusting the position of said displaceable rod (47).

6. Device as claimed in the preceding claim, **characterized** in that the rod (47) is displaced by rotating the screw (51) placed at the end of the rod (47), whereby the rod is rotated in the threading (E₁) between the rod (47) and the drill shaft (46), and that the rod (47) can be locked in the desired position by rotating the locking wheel (50) on the outside threading (E₂) at the end of the rod (47).

7. Device as claimed in any of the preceding claims, **characterized** in that the guide pulley (36) of the drive belt (18d) provided in the slide frame (37) comprises a wheel part (53), which is journalled on the shaft (54) by means of bearing means (52) to revolve in relation to said shaft, and that the shaft (54) is fixed permanently to the slide frame (37).

8. Device as claimed in any of the preceding claims, **characterized** in that the device comprises slide bushings (15) or equivalent on the base frame (11), which bushings guide the base frame (11) of the drill device and the spindle box (16) provided in same along the guide (12) when the equipment is shifted in the direction (L₁) of the longitudinal axis of the cylinder when the equipment is shifted to the next drilling position.

9. Device as claimed in the preceding claim, **characterized** in that the device comprises a fastening belt (13) or equivalent, on which the guides (12) are supported, whereby the drill device (10) can be mounted on support of the cylinder adjacent to the cylinder to be machined and whereby, during the drilling process, the drill equipment can be tensioned between the cylinder to be machined and the adjacent cylinder by, by means of the actuator (21), bringing the drill guide (19) into contact with the mantle face of the cylinder (S₁) to be machined.

10. Device as claimed in any of the preceding claims, **characterized** in that the drill guide (19a) comprises displaceable slide frames (19'), which can be guided along the dovetail guides (19a,19b) in the drill guide (19) in the lateral direction into a horizontal position corresponding to that to which the drill bit (17) related to the slide frame (19') is transferred.

## Patentansprüche

1. Vorrichtung zum Bohren von Löchern in den Mantel eines Zylinders in einer Papiermaschine, wobei die Vorrichtung einen Grundrahmen (11) und einen Spindelkasten (16) aufweist, der relativ zu dem Grundrahmen (11) in Richtung auf die zu bearbeitende Zylinderfläche verschiebbar ist,
wobei der Spindelkasten (16) Bohranordnungen (17, 46, 41, ...) trägt und einen ersten Antriebsmotor (20) aufweist, der geeignet ist, um den Spindelkasten zu bewegen, um eine Zuführbewegung für die Bohranordnungen (17, 46, 41, ...) zu erzeugen,
wobei jede der Bohranordnungen einen Schieberahmen (41a, 41b, ...) aufweist, mit dem eine Bohrwelle (46) verbunden ist, wobei die Bohrwelle mit einer Antriebsscheibe (34) verbunden ist und durch diese gedreht wird und mittels einer Lagereinrichtung gelagert ist, um in Beziehung zu dem Schieberahmen (41a, 41b, ...) ein mit jeder Bohrwelle (46) verbundenes Bohrstück (17a, 17b, 17c, ...) zu drehen, und
wobei der Spindelkasten ferner einen zweiten Antriebsmotor (18) aufweist, der geeignet ist, um mit Hilfe eines Antriebsriemens (18d) die Bohrstücke (17a, 17b, 17c, ...) gleichzeitig zu drehen,
wobei ferner eine Kopplungseinrichtung (42, 43, 44) zwischen dem Spindelkasten (16) und jedem verschiebbaren Schieberahmen (30) vorgesehen ist, mit deren Hilfe jeder Schieberahmen (41a, 41b,...) in der angestrebten Horizontalposition festgelegt werden kann,
dadurch gekennzeichnet, daß zwischen jedem der benachbarten Schieberahmen (41a, 41b, ...) ein zweiter Schieberahmen (37a, 37b, ...) vorgesehen ist, und daß jeder zweite Schieberahmen (37a, 37b, ...) eine Leitscheibe (36a, 36b, ...) für den Antriebsriemen (18d) trägt und sowohl horizontal als auch vertikal in Nuteinrichtungen (38, 39) eingestellt werden kann, die jeweils in dem Spindelkasten (16) und in dem zweiten Schieberahmen (37a, 37b) vorgesehen sind.

2. Vorrichtung gemäß Patentanspruch 1, dadurch gekennzeichnet, daß die Kopplungseinrichtung (42, 43, 44) eine in dem Schieberahmen (41a, 41b, ...) vorgesehene Nut (44), eine in der Nut (44) vorhandene Mutter (43) oder dergleichen, eine mit dem Gewinde in der Nut (43) gekoppelte Schraube (42) aufweist, wodurch, wenn die Schraube (42) gedreht wird, die Nut (43) gegen die Wand (44') der rückgesetzten Nut (44) festgezogen werden kann, wodurch der Schieberahmen (41a, 41b,...) in der erwünschten Horizontalposition festgelegt werden kann.

3. Vorrichtung gemäß Patentanspruch 1 oder 2, dadurch gekennzeichnet, daß der Spindelkasten (16) eine in den Nuteinrichtungen enthaltene Horizontalnut (38a, 38b) aufweist, in der der zweite Schieberahmen (37a, 37b) parallel zu der Nut festgelegt werden kann, und daß der zweite Schieberahmen (37a, 37b, ...) eine in den Nuteinrichtungen enthaltene Vertikalnut (39) hat, wodurch ein Festlegungselement, vorzugsweise eine Schraube (40), durch die Vertikalnut (39) mit einer in der Horizontalnut (38a, 38b) in dem Spindelkasten (16) vorhandenen Mutter (45) oder dergleichen gekoppelt werden kann, wodurch durch Drehen der Schraube (40) der zweite Schieberahmen (37a, 37b, ...) in Beziehung zu dem Spindelkasten (16) in der erwünschten Horizontal- und Vertikalposition festgelegt werden kann.

4. Vorrichtung gemäß einem der vorangegangenen Patentansprüche, dadurch gekennzeichnet, daß der Antriebsriemen (18d) ein gezahnter Riemen ist und die Antriebsscheiben (35a, 35b,...) der Bohrstücke (17a, 17b, 17c,...) Scheiben für verzahnte Riemen sind.

5. Vorrichtung gemäß einem der vorangegangenen Patentansprüche, dadurch gekennzeichnet, daß die Bohrwelle (46) eine verschiebbare Stange (47) hat, die mittig durch die Welle gelegt worden ist, und daß die angestrebte Hublänge für das Bohrstück (17a, 17b,...) durch Einstellen der Position der verschiebbaren Stange (47) bestimmt werden kann.

6. Vorrichtung gemäß dem vorangegangenen Patentanspruch, dadurch gekennzeichnet, daß die Stange (47) durch Drehen der an dem Ende der Stange (47) angeordneten Schraube (51) verschoben wird, wodurch die Stange in dem Gewinde (E₁) zwischen der Stange (47) und der Bohrwelle (46) gedreht wird, und daß die Stange (47) durch Drehen des Festlegungsrades (50) an dem Außenseitengewinde (E₂) an dem Ende der Stange (47) in der angestrebten Position festgelegt werden kann.

7. Vorrichtung gemäß einem der vorangegangenen Patentansprüche, dadurch gekennzeichnet, daß die in dem Schieberahmen (37) vorgesehene Leitscheibe (35) des Aritriebsriemens (18d) ein Radteil (53) hat, das an der Welle (54) gelagert ist, und zwar mittels einer Lagereinrichtung (52), um in Beziehung zu der Welle zu drehen, und daß die Welle (54) stabil an dem Schieberahmen (37) befestigt ist.

8. Vorrichtung gemäß einem der vorangegangenen Patentansprüche, dadurch gekennzeichnet, daß die Vorrichtung an dem Grundrahmen (11) Gleitbuchsen (15) oder dergleichen aufweist, welche Buchsen den Grundrahmen (11) der Bohrvorrichtung und den darin vorgesehenen Spindelkasten (16) entlang der Führung (12) führen, sofern die Ausrüstung in der Richtung (L₁) der Längsachse des Zylinders verstellt wird, wenn die Ausrüstung zu der nächsten Bohrposition verstellt wird.

9. Vorrichtung gemäß dem vorangegangenen Patentanspruch, dadurch gekennzeichnet, daß die Vorrichtung einen Befestigungsriemen (13) oder dergleichen aufweist, an welchem die Führungen (12) getragen werden, wodurch die Bohrvorrichtung (10) abgestützt an dem neben dem zu bearbeitendem Zylinder befindlichen Zylinder montiert werden kann und wodurch während des Bohrprozesses die Bohrausrüstung zwischen dem zu bearbeitenden Zylinder und dem benachbarten Zylinder dadurch gespannt werden kann, daß durch das Stellglied (21) die Bohrführung (19) mit der zu bearbeitenden Mantelfläche des Zylinders (S₁) in Kontakt gebracht wird.

10. Vorrichtung gemäß einem der vorangegangenen Patentansprüche, dadurch gekennzeichnet, daß die Bohrführung (19a) verschiebbare Schieberahmen (19') aufweist, die entlang der Schwalbenschwanzführungen (19a, 19b) in der Bohrführung (19) in der Seitenrichtung in eine Horizontalposition geführt werden können, und zwar entsprechend derjenigen, zu der das dem Schieberahmen (19') zugeordnete Bohrstück (17) transferiert worden ist.

## Revendications

1. Dispositif pour percer des trous dans l'enveloppe d'un cylindre de machine à papier, ledit dispositif comportant un châssis (11) et une boîte à broches (16) mobile par rapport audit châssis (11) vers la face du cylindre à usiner,
dans lequel la boîte à broches (16) supporte des systèmes de perçage (17, 46, 41,...) et comporte un premier moteur d'entraînement (20), qui est conçu pour déplacer la boîte à broches afin de créer un mouvement d'avance pour les systèmes de perçage (17, 46, 41,...),
dans lequel chacun desdits systèmes de perçage comporte un bâti coulissant (41a, 41b, ...) auquel est reliée une colonne de perçage (46), ladite colonne de perçage étant reliée à une poulie d'entraînement (34) et entraînée par celle-ci et pivotant par l'intermédiaire d'un moyen formant palier pour tourner par rapport au bâti coulissant (41a, 41b,...), un foret (17a, 17b, 17c,...) étant relié à chaque colonne de perçage (46), et
dans lequel la boîte à broches comporte en outre un deuxième moteur d'entraînement (18), conçu pour faire tourner simultanément les forets (17a, 17b, 17c,...) par l'intermédiaire d'une courroie d'entraînement (18d),
dans lequel des moyens d'accouplement (42, 43, 44) sont en outre disposés entre la boîte à broches (16) et chaque bâti coulissant mobile (30), ceux-ci permettant de verrouiller chaque bâti coulissant (41a, 41b,...) dans la position horizontale voulue,
caractérisé en ce qu'un second bâti coulissant (37a, 37b,...) est disposé entre tous les bâtis coulissants voisins (41a,41b,...), et en ce que chacun desdits seconds bâtis coulissants (37a, 37b,...) supporte une poulie de guidage (36a, 36b,...) pour la courroie d'entraînement (18d) et peut être réglé dans les deux directions horizontale et verticale dans des moyens formant gorges (38, 39) respectivement ménagées dans la boîte à broches (16) et dans les seconds bâtis coulissants (37a, 37b).

2. Dispositif selon la revendication 1, **caractérisé** en ce que les moyens d'accouplement (42, 43, 44) comportent une gorge (44) ménagée dans le bâti coulissant (41a, 41b...), un écrou (43) ou équivalent présent dans la gorge (44), une vis (42) étant en prise avec le filetage dudit écrou (43), grâce à quoi, lorsqu'on fait tourner la vis (42), l'écrou (43) peut être serré contre la paroi (44') de la gorge (44) à dépouille, grâce à quoi le bâti coulissant (41a, 41b...) peut être verrouillé dans la position horizontale voulue.

3. Dispositif selon la revendication 1 ou 2, caractérisé en ce que la boîte à broches (16) comporte une gorge horizontale (38a,38b) ménagée dans ledit moyen formant gorge, dans laquelle le second bâti coulissant (37a, 37b) peut être verrouillé parallèlement à ladite gorge, et en ce que le second bâti coulissant (37a, 37b... comporte une gorge verticale (39) ménagée dans ledit moyen formant gorge, grâce à quoi un élément de verrouillage, de préférence une vis (40), peut être accouplé par l'intermédiaire de la gorge verticale (39) avec un écrou (45) ou équivalent présent dans la gorge horizontale (38a, 38b) de la boîte à broches (16), grâce à quoi, en faisant tourner la vis (40), le second bâti coulissant (37a, 37b...) peut être verrouillé dans la position horizontale et verticale voulue par rapport à la boîte à broches (16).

4. Dispositif selon l'une quelconque des revendications précédentes, **caractérisé** en ce que la courroie d'entraînement (18d) est une courroie crantée, et les poulies d'entraînement (35a, 35b...) des forets (17a, 17b, 17c...) sont des poulies pour courroies crantées.

5. Dispositif selon l'une quelconque des revendications précédentes, **caractérisé** en ce que la colonne de perçage (46) comporte une tige mobile (47), que l'on a fait passer à travers le centre de la colonne, et en ce que la longueur voulue de la course peut être déterminée pour le foret (17a, 17b...) en réglant la position de ladite tige mobile (47).

6. Dispositif selon la revendication précédente, **caractérisé** en ce que la tige (47) est déplacée en faisant tourner la vis (51) placée à l'extrémité de la tige (47), grâce à quoi on fait tourner la tige dans le filetage (E₁ ) entre la tige (47) et la colonne de perçage (46), et en ce que la tige (47) peut être verrouillée dans la position voulue en faisant tourner la molette de verrouillage (50) sur le filetage extérieur (E₂) à l'extrémité de la tige (47).

7. Dispositif selon l'une quelconque des revendications précédentes, **caractérisé** en ce que la poulie de guidage (36) de la courroie d'entraînement (18d) disposée dans le bâti coulissant (37) comporte une partie formant roue (53), qui pivote sur la colonne (54) par l'intermédiaire d'un moyen formant palier (52) pour tourner par rapport à ladite colonne, et en ce que la colonne (54) est fixée de manière permanente au bâti coulissant (37).

8. Dispositif selon l'une quelconque des revendications précédentes, **caractérisé** en ce que le dispositif comporte des douilles coulissantes (15) ou équivalent sur le châssis (11), lesquelles douilles guident le châssis (11) du dispositif de perçage, et la boîte à broches (16) disposée dans celui-ci, le long du guide (12) lorsque les équipements sont déplacés dans la direction (L₁) de l'axe longitudinal du cylindre vers la position de perçage suivante.

9. Dispositif selon la revendication précédente, **caractérisé** en ce que le dispositif comprend une courroie de fixation (13) ou équivalent, sur laquelle les guides (12) sont supportés grâce à quoi le dispositif de perçage (10) peut être monté sur le support du cylindre au voisinage immédiat du cylindre à usiner et grâce à quoi, pendant l'opération de perçage, les équipements de perçage peuvent être tendus entre le cylindre à usiner et le cylindre voisin, en amenant, à l'aide de l'actionneur (21), le guide de perçage (19) au contact de la face de l'enveloppe du cylindre (S₁) à usiner.

10. Dispositif selon l'une quelconque des revendications précédentes, **caractérisé** en ce que le guide de perçage (19a) comporte des bâtis coulissants mobiles (19'), qui peuvent être guidés dans la direction latérale, le long de guides (19a, 19b) à queue d'aronde situés dans le guide de perçage (19), jusqu'à une position horizontale correspondant à celle dans laquelle est déplacé le foret (17) correspondant au bâti coulissant (19').
